# NEUE EUROPÄISCHE PATENTSCHRIFT

(11) **EP 3 523 073 B2**
(45) Veröffentlichungstag und Bekanntmachung des Hinweises auf die Entscheidung über den Einspruch: **23.07.2025**
(45) Hinweis auf die Patenterteilung: 21.12.2022
(21) Anmeldenummer: 17780112.3
(22) Anmeldetag: 05.10.2017
(51) Int. Cl.: B23B 51/02

(54) **METALL-BOHRWERKZEUG**
METAL DRILLING TOOL
OUTIL DE PERÇAGE MÉTALLIQUE

(30) Priorität: 07.10.2016 CH 13492016; 02.02.2017 DE 102017201684
(43) Veröffentlichungstag der Anmeldung: 14.08.2019
(73) Patentinhaber: MAPAL Fabrik für Präzisionswerkzeuge Dr. Kress KG, 73431 Aalen (DE)
(72) Erfinder: KRENZER, Ulrich, 87787 Wolfertschwenden (DE); FRIEDLI, Paul, CH-4500 Solothurn (CH)
(74) Vertreter: Kordel, Mattias
(86) Internationale Anmeldenummer: PCT/EP2017/075418
(87) Internationale Veröffentlichungsnummer: WO 2018/065550

(56) Entgegenhaltungen:
- EP-A1- 0 137 898
- EP-A1- 1 604 762
- WO-A1-2009/027055
- DE-A1- 3 626 523
- US-A1- 2011 268 518

## Beschreibung

Die Erfindung betrifft ein Metall-Bohrwerkzeug zum Einbringen von Bohrungen in metallische Werkstücke durch spanende Bearbeitung.

Metall-Bohrwerkzeuge der hier angesprochenen Art sind bekannt. Sie dienen dazu, Bohrungen in metallische Werkstücke im Wege der spanabhebenden Bearbeitung einzubringen. Derartige Werkzeuge weisen eine Mittelachse, eine Umfangsfläche sowie eine Stirnseite sowie ein gegenüberliegendes Ende auf, außerdem mindestens zwei Hauptschneiden, die im Bereich der Stirnseite angeordnet sind. Diese gehen von der Umfangsfläche des Metall-Bohrwerkzeugs aus und erstrecken sich nach innen im Wesentlichen in Richtung auf die Mittelachse. Zwischen den mindestens zwei Hauptschneiden ist üblicherweise eine die Mittelachse schneidende Querschneide vorgesehen. Diese erlaubt zwar beim Anbohren auf ebenen und rechtwinklig zur Mittelachse verlaufenden Flächen eine zufriedenstellende Eigenzentrierung des Bohrers, zumindest, wenn die Länge des Metall-Bohrwerkzeugs nicht zu groß und damit dessen Eigenstabilität zu gering ist. Allerdings neigt ein derartiges Werkzeug zu Pendelbewegungen, die entlang der Erstreckung der Querschneide verlaufen, sodass bei der Bearbeitung eines Werkstücks Schwingungen auftreten. Diese Schwingungen überlagern sich mit der Rotationsbewegung des Werkzeugs, sodass sich eine geringe Standzeit des Werkzeugs ergibt. Außerdem lassen sich aufgrund derartiger Schwingungen keine zylindrischen Bohrungen erzeugen. Schließlich werden auch Führungsflächen des Werkzeugs durch Pendelbewegungen stark belastet. WO2009/027055 offenbart ein Metall-Bohrwerkzeug gemäß dem Oberbegriff des Anspruchs 1.

Bei Metall-Bohrwerkzeugen der hier angesprochenen Art, die drei Hauptschneiden und damit auch drei Querschneiden-Segmente aufweisen, ergibt sich insofern eine Verbesserung der Führung des Werkzeugs, als Pendelbewegungen zumindest teilweise unterdrückt werden können. Jedoch ist es erforderlich, bei der Bearbeitung eines Werkstücks relativ große Anpresskräfte aufzubringen.

Aufgabe der Erfindung ist es daher, ein Metall-Bohrwerkzeug zum Einbringen von Bohrungen in metallische Werkstücke durch spanende Bearbeitung zu schaffen, welches diese Nachteile vermeidet.

Zur Lösung dieser Aufgabe wird ein Metall-Bohrwerkzeug zum Einbringen von Bohrungen in metallische Werkstücke durch spanende Bearbeitung - im Folgenden auch kurz als Bohrwerkzeug bezeichnet - vorgeschlagen, welches die in Anspruch 1 genannten Merkmale aufweist. Es weist eine Mittelachse, eine Umfangsfläche, eine Stirnseite sowie ein gegenüberliegendes Ende, mindestens zwei im Bereich der Stirnseite angeordnete Hauptschneiden mit zugehörigen Freiflächen auf, die von der Umfangsfläche des Werkzeugs ausgehen. Die mindestens zwei Hauptschneiden sind auf einer gedachten konzentrisch zur Mittelachse angeordneten ersten Kegelfläche angeordnet, die einen sich in Richtung auf das gegenüberliegende Ende öffnenden ersten Kegelwinkel aufweist, welcher den Spitzenwinkel des Metall-Bohrwerkzeugs darstellt. Der erste Kegelwinkel kann bis zu 180° betragen. Es ist also auch möglich, dass die Hauptschneiden in einer gedachten Ebene liegen, auf welcher die Mittelachse senkrecht steht. Das erfindungsgemäße Werkzeug zeichnet sich durch einen Zentrierabschnitt mit mindestens drei Kanten, mindestens drei Seitenflächen sowie einer gedachten Grundfläche aus, der dadurch gekennzeichnet ist, dass der Zentrierabschnitt statt einer Querschneide an dem Bohrwerkzeug vorgesehen ist, so dass er die Querschneide ersetzt. Weiterhin liegen mindestens zwei der Kanten auf einer gedachten konzentrisch zur Mittlachse angeordneten zweiten Kegelfläche, welche einen sich in Richtung auf das gegenüberliegende Ende öffnenden zweiten Kegelwinkel aufweist. Dieser ist kleiner als der Winkel, welchen die Hauptschneiden miteinander einschließen, sodass die gedachte zweite Kegelfläche, von dem gegenüberliegenden Ende aus gesehen, gegenüber der Stirnseite vorspringt. Darüber hinaus weisen die mindestens zwei Hauptschneiden jeweils einen äußeren ersten Hauptschneidenabschnitt und einen sich daran anschließenden inneren zweiten Hauptschneidenabschnitt auf, wobei sich die mindestens zwei Hauptschneiden jeweils in eine der Kanten des Zentrierabschnitts fortsetzen. Es ergibt sich also auf der Stirnseite des Metall-Bohrwerkzeugs eine als Zentrierspitze wirkende zentrale Erhebung, mit welcher das Werkzeug bei der Bearbeitung eines Werkstücks in dieses als erstes eindringt, sodass eine Führung des Werkzeugs erreicht wird. Der Zentrierabschnitt stabilisiert bei der Bearbeitung eines Werkstücks das Metall-Bohrwerkzeug in der erzeugten Bohrung. Es hat sich gezeigt, dass das Werkzeug umso besser in dem Werkstück zentriert wird, je spitzer der zweite Kegelwinkel ausgeführt ist. Es hat sich aber auch herausgestellt, dass derartige Zentrierabschnitte empfindlicher werden gegenüber Ausbrüchen.

Aufgrund der Tatsache, dass bei einem derartigen Werkzeug auf eine Querschneide verzichtet beziehungsweise Querschneiden-Segmente durch den Zentrierabschnitt ersetzt wird beziehungsweise werden, ergeben sich im zentrumsnahen Bereich des Metall-Bohrwerkzeugs bessere Bohreigenschaften, als dies bei üblichen Querschneiden der Fall ist. Die Bohreigenschaften werden insofern verbessert, als das Metall-Bohrwerkzeug bei der Bearbeitung eines Werkstücks lediglich minimale Torsions- und Axialschwingungen zeigt. Die Ratterneigung ist überdies stark reduziert. Es ergibt sich also eine hohe Laufruhe, sodass die Rundheit und die Oberflächengüte der erzeugten Bohrung deutlich verbessert werden. Es können auch engere Bohrungstoleranzen mit dem hier beschriebenen erfindungsgemäßen Werkzeug eingehalten werden. Außerdem wird die Zylindrizität einer Bohrung aufgrund der hier gegebenen Bohreigenschaften verbessert. Es hat sich auch gezeigt, dass aufgrund des hier vorgesehenen Zentrierabschnitts ein höherer Vorschub bei der Bearbeitung eines Werkstücks möglich ist. Dadurch, dass aufgrund der verbesserten Führung des Werkzeugs dessen Führungsflächen entlastet werden, wird ein Klemmen des Werkzeugs in dem bearbeiteten Werkstück vermieden. Die verbesserte Zentrierung führt auch dazu, dass das Werkstück weniger erwärmt wird. Auf diese Weise lässt sich der Verschleiß sowohl des Werkzeugs als auch des Werkstücks deutlich reduzieren.

Der Zentrierabschnitt ist bei dem hier vorgeschlagenen Bohrwerkzeug anstelle der Querschneide vorgesehen, er ersetzt also die Querschneide. Das hier vorgeschlagene Bohrwerkzeug weist demnach insbesondere keine Querschneide auf, ist also besonders bevorzugt frei von einer Querschneide. Die Querschneide ist vielmehr durch den Zentrierabschnitt ersetzt. Mithilfe des Bohrwerkzeugs kann eine Rundheit von 10 µm erreicht werden, wohingegen ein konventionelles Bohrwerkzeug mit Querschneide typischerweise eine dreieckförmige Unrundheit von 50 µm erzeugt.

Bei der Grundfläche handelt es sich insbesondere um eine gedachte Grundfläche, wobei diese bevorzugt lediglich als gedachte geometrische Konstruktion existiert und im Übrigen im Material des Bohrwerkzeugs verborgen ist, da der Zentrierabschnitt vorzugsweise einstückig mit zumindest einem weiteren Abschnitt des Bohrwerkzeugs, insbesondere mit dem Teil des Bohrwerkzeugs, welches die Hauptschneiden und die ersten Freiflächen aufweist, ausgebildet ist. Bevorzugt ist die gedachte Grundfläche ein regelmäßiges Polygon, wobei der Mittelpunkt dieses Polygons zugleich der Fußpunkt einer Höhe des Zentrierabschnitts, insbesondere einer Spitze desselben, ist.

Besonders bevorzugt ist die Grundfläche ein regelmäßiges Polygon, wobei die Grundfläche einen Mittelpunkt besitzt, und wobei alle Kanten des Zentrierabschnitts, die von dessen Spitze ausgehen beziehungsweise sich in der Spitze treffen, gleich lang sind, wobei die Verbindungsstrecke zwischen dem Mittelpunkt der Grundfläche einerseits und der Spitze andererseits senkrecht zu der Grundfläche verläuft und damit der Fußpunkt des Lotes von der Spitze mit dem Mittelpunkt der Grundfläche identisch ist, also im Inneren der Grundfläche liegt. Die Grundfläche kann aber auch kein regelmäßiges, aber wenigstens punktsymmetrisches Polygon sein, wobei ein Symmetriezentrum dieses Polygons mit dem Höhenfußpunkt des Zentrierabschnitts zusammenfällt. In diesem Fall können die Kanten verschiedene Längen aufweisen.

Gemäß einer Weiterbildung der Erfindung ist vorgesehen, dass der Zentrierabschnitt koaxial zu der Mittelachse angeordnet ist. Bevorzugt liegt dabei die Spitze des Zentrierabschnitts auf der Mittelachse.

Ist der Zentrierabschnitt nach einer der zuvor beschriebenen Ausführungsformen ausgebildet, ergibt sich eine ideale Eigenzentrierung, wobei keine oder nur noch stark reduzierte Schwingbewegungen des Bohrwerkzeugs bei der Bearbeitung eines Werkstücks auftreten. Der Zentrierabschnitt in Form einer Zentrierspitze übemimmt die Funktion einer Gegenspitze während des gesamten Bohrvorgangs. Hierdurch ergibt sich eine hohe Laufruhe, eine hohe Stabilität, minimale Torsions- und Axialschwingungen, sowie kein Rattern. Die derart hergestellte Bohrung weist eine erhöhte Kreisformgenauigkeit auf, wobei die Ausbildung von n-eckigen Bohrungen vermieden wird. Die Bohrung weist also insbesondere eine bessere Zylindrizität auf. Es ergeben sich engere Bohrungstoleranzen und eine verbesserte Prozesssicherheit. Darüber hinaus sind höhere Vorschübe beim Bohren möglich. Das Bohrwerkzeug klemmt nicht, und Führungsfasen des Bohrwerkzeugs sind dank der stabilisierenden Gegenspitze in Form des Zentrierabschnitts entlastet, sodass sie länger intakt bleiben. Der Druck auf die Führungsfasen wird stark reduziert, ohne die Führung zu verlieren. Es ergibt sich auch eine geringere Werkstückerwärmung.

Diese Vorteile verwirklichen sich ganz besonders, wenn der Zentrierabschnitt koaxial zu der Mittelachse angeordnet ist, und insbesondere wenn die Spitze des Zentrierabschnitts auf der Mittelachse liegt.

Es ist möglich, dass der Zentrierabschnitt eine quadratische Grundfläche und insbesondere vier bevorzugt gleiche Seitenflächen aufweist. In diesem Fall verwirklichen sich in ganz besonderer Weise die bereits beschriebenen Vorteile. Die Grundfläche kann auch die Form eines gleichseitigen Dreiecks aufweisen, wobei dann bevorzugt auch alle drei Seitenflächen als insbesondere untereinander und mit der Grundfläche identische, das heißt gleich große, gleichseitige Dreiecke ausgebildet sind.

Bei einem bevorzugten Ausführungsbeispiel weist das Bohrwerkzeug drei Hauptschneiden auf, wobei der Zentrierabschnitt drei Kanten und drei gleiche Seitenflächen sowie eine zu den Seitenflächen gleiche, als gleichseitiges Dreieck ausgebildete Grundfläche aufweist.

Bei einem anderen bevorzugten Ausführungsbeispiel weist das Bohrwerkzeug zwei Hauptschneiden auf, wobei der Zentrierabschnitt eine quadratische Grundfläche mit vier bevorzugt gleichen Seitenflächen aufweist.

Den Hauptschneiden des Bohrwerkzeugs sind vorzugsweise jeweils Spannuten zugeordnet, die sich in Richtung von der Stirnseite weg und hin zu dem gegenüberliegenden Ende öffnen, das heißt erweitern. Insbesondere vergrößert sich ein Querschnitt der Spannuten von der Stirnseite aus gesehen in Richtung des gegenüberliegenden Endes. Dies erleichtert die Abfuhr von Spänen in den Spannuten.

Bei einem bevorzugten Bohrwerkzeug ist vorgesehen, dass es drei Hauptschneiden aufweist. In diesem Fall umfasst der Zentrierabschnitt drei Kanten und drei Seitenflächen. Dabei gehen die Hauptschneiden des Werkzeugs über einen Knick oder einen gebogenen Bereich in die drei Kanten des Zentrierabschnitts über. Darüber hinaus gehen die Freiflächen der drei Hauptschneiden über einen Knick oder über einen gebogenen Bereich in die Seitenflächen des Zentrierabschnitts über, der bei diesem Ausführungsbeispiel eine dreieckige gedachte Grundfläche aufweist. Der Verlauf der Kanten und Seitenflächen ist so gewählt, dass der Zentrierabschnitt sich in Vorschubrichtung des Bohrwerkzeugs über die Stirnfläche erhebt, also aus dieser hervorragt.

Der Übergang der Hauptschneiden und der Freiflächen in die entsprechenden Bereiche des Zentrierabschnitts kann also über einen Knick, also mehr oder weniger abrupt erfolgen. Es ist aber auch möglich, in dem Übergang zwischen den Schneiden und Kanten beziehungsweise Freiflächen und Seitenflächen des Zentrierabschnitts einen gebogenen Bereich vorzusehen, sodass sich ein mehr oder weniger weicher Übergang ergibt, der durch die Wahl des Krümmungsradius im gebogenen Bereich an verschiedene Werkstoffe von zu bearbeitenden Werkstücken angepasst werden kann.

Bei dem hier vorliegenden Ausführungsbeispiel mit drei Hauptschneiden und drei Kanten im Bereich des Zentrierabschnitts ist bevorzugt vorgesehen, dass alle drei Kanten auf der gedachten ersten Kegelfläche liegen.

Bei einem bevorzugten Ausführungsbeispiel des Bohrwerkzeugs mit zwei Hauptschneiden ist vorgesehen, dass der Zentrierabschnitt vier Kanten und vier Seitenflächen aufweist. Dabei gehen die beiden Hauptschneiden über einen Knick oder über einen gebogenen Bereich in zwei gegenüberliegende Kanten des Zentrierabschnitts über und die beiden Freiflächen der Hauptschneiden in zwei gegenüberliegende Seitenflächen. Der Zentrierabschnitt weist also zwei paarweise gegenüberliegende Seitenflächen auf, in welche die Freiflächen übergehen und zwei dazwischen liegende paarweise angeordnete weitere Seitenflächen. Die Grundfläche des Zentrierabschnitts ist viereckig, dabei ist es möglich, quadratische oder auch als Parallelogramm ausgebildete Grundflächen vorzusehen.

Bei dem hier beschriebenen Ausführungsbeispiel ist vorgesehen, dass mindestens zwei der Kanten des Zentrierabschnitts, insbesondere die sich gegenüberliegenden, an die beiden Hauptschneiden anschließenden Kanten, auf der zweiten Kegelfläche liegen. Die beiden anderen Kanten können gegenüber der zweiten Kegelfläche zurückspringen. Vorzugsweise liegen jedoch alle vier Kanten auf der zweiten Kegelfläche, sodass sie gleichmäßig mit dem Material des zu bearbeitenden Werkstücks in Eingriff treten.

Bei einem weiteren bevorzugten Ausführungsbeispiel ist vorgesehen, dass sich an die den Hauptschneiden abgewandten Enden der ersten Freifläche jeweils eine zweite Freifläche anschließt, die von den den Hauptschneiden abgewandten Enden der ersten Freiflächen unter einem zweiten Freiwinkel in Richtung auf das gegenüberliegende Ende des Werkzeugs abfallen. Diese Art der Ausgestaltung ist sowohl bei drei- als auch bei zweischneidigen Bohrwerkzeugen möglich, überdies auch bei Werkzeugen, die eine größere Anzahl von Hauptschneiden umfassen.

Bei einer derartigen Ausgestaltung des Bohrwerkzeugs, insbesondere bei einem Bohrwerkzeug mit zwei Hauptschneiden, ist es möglich, dass, wie oben gesagt, zwei Seitenflächen des Zentrierabschnitts eine Fortsetzung der ersten Freifläche bilden. Sie liegen einander gegenüber. Die beiden anderen zwischen diesen Seitenflächen liegenden Seitenflächen des Zentrierabschnitts werden durch Bereiche der zweiten Freiflächen gebildet, die unter einem anderen Freiwinkel als die ersten Freiflächen geneigt sind.

Es ist also möglich, dass zwei paarweise gegenüberliegende Seitenflächen einen anderen Winkel miteinander einschließen, als die beiden anderen der vier Seitenflächen des Zentrierabschnitts.

Bei einem bevorzugten Ausführungsbeispiel des Bohrwerkzeugs ist vorgesehen, dass für den ersten Kegelwinkel α folgende Vorgaben getroffen werden: Der Winkel α liegt vorzugsweise in einem Bereich von 120° ≤ α ≤ 180°, insbesondere in einem Bereich von 120° ≤ α < 180°, insbesondere in einem Bereich von 130° ≤ α ≤ 150°.

Der erste Kegelwinkel bildet, wie gesagt, den Spitzenwinkel des Bohrwerkzeugs im Bereich der Hauptschneiden. Er kann in Abhängigkeit von dem zu bearbeitenden Material des Werkstücks gewählt werden. In der Praxis haben sich die hier aufgeführten Winkel besonders bewährt.

Entsprechend ist bei einem bevorzugten Ausführungsbeispiel des Bohrwerkzeugs vorgesehen, dass für den zweiten Kegelwinkel β die Voraussetzung gilt, dass dieser kleiner ist als der von den Hauptschneiden eingeschlossene Winkel. Er ist also kleiner als 180°, wenn diese in einer gedachten Ebene liegen, auf welcher die Mittelachse senkrecht steht. Oder er ist kleiner als der erste Kegelwinkel a. Schließlich ist vorgesehen, dass der zweite Kegelwinkel β vorzugsweise in einem Bereich von 80° ≤ β ≤ 150°, insbesondere in einem Bereich von 90° ≤ β ≤ 140° gewählt wird.

Der zweite Kegelwinkel β kann umso spitzer gewählt werden, je weicher das Material des zu bearbeitenden Werkstücks ist.

Der zweite Kegelwinkel β bildet den Spitzenwinkel des Bohrwerkzeugs im Bereich des Zentrierabschnitts.

Ein bevorzugtes Ausführungsbeispiel eines Bohrwerkzeugs mit drei Hauptschneiden zeichnet sich dadurch aus, dass die drei Seitenflächen des Zentrierabschnitts mit der Mittelachse des Werkzeugs einen Winkel δ einschließen. Vorzugsweise sind alle drei Seitenflächen unter dem gleichen Winkel δ relativ zur Mittelachse geneigt. Er liegt in einem Bereich von 25° ≤ δ ≤ 65°, vorzugsweise in einem Bereich von 35° ≤ δ ≤ 55°.

Ein weiteres bevorzugtes Ausführungsbeispiel mit zwei Hauptschneiden zeichnet sich dadurch aus, dass der Zentrierabschnitt zwei paarweise gegenüberliegende Seitenflächen aufweist, die einen sich zum gegenüberliegenden Ende öffnenden Winkel γ einschließen, für den Folgendes gilt: 60° ≤ γ ≤ 150°, insbesondere 80° ≤ γ ≤ 120°. Vorzugsweise schließen alle gegenüberliegenden Seitenflächen des Zentrierabschnitts den gleichen Winkel y miteinander ein.

Bei einem bevorzugten Ausführungsbeispiel ist vorgesehen, dass sich nicht alle Kanten im Bereich der Mittelachse schneiden, sondern dass vielmehr an der Spitze des Zentrierabschnitts eine Querschneide vorgesehen ist, die zwischen den Kanten des Zentrierabschnitts angeordnet ist, die in die zwei Hauptschneiden übergehen. Dieses Ausführungsbeispiel ist also bei Bohrwerkzeugen realisiert, die zwei Schneiden umfassen. Eine derartige Ausgestaltung sorgt dafür, dass die auf der Mittelachse liegende Spitze des Zentrierabschnitts nicht so empfindlich ist und damit also nicht so leicht bei der Bearbeitung eines Werkstücks abbricht.

Der hier beschriebene Zentrierabschnitt dient dazu, die Nachteile von Querschneiden zu vermeiden, die bei herkömmlichen Bohrwerkzeugen vorgesehen sind. Um die durch den Zentrierabschnitt gegebenen Vorteile nicht zu sehr zu beeinträchtigen oder gar aufzugeben, ist vorgesehen, dass die Länge der oben genannten Querschneide sehr klein ist und vorzugsweise lediglich weniger als 6 %, insbesondere weniger als 2 % des Durchmessers des Bohrwerkzeugs ausmacht.

Bei einem weiteren bevorzugten Ausführungsbeispiel des Bohrwerkzeugs ist vorgesehen, dass der Durchmesser eines Umkreises um die gedachte Grundfläche des Zentrierabschnitts kleiner ist als der Durchmesser des Bohrwerkzeugs, insbesondere allenfalls 3 % bis 14 %, besonders bevorzugt 5 % bis 12 % des Durchmessers des Bohrwerkzeugs ausmacht. Es hat sich als vorteilhaft herausgestellt, wenn der Durchmesser des Umkreises um die gedachte Grundfläche des Zentrierabschnitts in Abhängigkeit von der Materialhärte des zu bearbeitenden Werkstücks gewählt wird. Vorzugsweise ist vorgesehen, dass Durchmesser des Umkreises um die gedachte Grundfläche des Zentrierabschnitts umso kleiner gewählt wird, je härter das Material des zu bearbeitenden Werkstücks ist.

Bei einem weiteren bevorzugten Ausführungsbeispiel eines Bohrwerkzeugs ist vorgesehen, dass mindestens eine der Seitenflächen des Zentrierabschnitts mit einer Ausspitzung versehen ist. Diese Ausgestaltung zeichnet sich dadurch aus, dass die Spanfläche der zugehörigen Kante des Zentrierabschnitts reduziert und damit die Spanabfuhr verbessert wird. Der Übergang des Zentrierabschnitts wird durch die Ausspitzungen gebildet, welche vorzugsweise einen Vormittestand aufweisen, durch welchen die Breite des Zentrierabschnitts, gemessen senkrecht zur Durchmesserlinie, definiert wird. Die in Richtung der Durchmesserlinie gemessene Länge des Zentrierabschnitts wird durch den Bereich definiert, in welchem die ersten Freiflächen der Hauptschneiden in eine Seitenfläche des Zentrierabschnitts übergehen.

Bei einem weiteren bevorzugten Ausführungsbeispiel ist vorgesehen, dass die mindestens zwei Hauptschneiden jeweils in eine Nebenschneide übergehen, wobei den Nebenschneiden vorzugsweise im Bereich der Umfangsfläche jeweils Führungsflächen zugeordnet sind, sodass das Bohrwerkzeug in einer erzeugten Bohrung optimal geführt wird und damit die Schneiden entlastet werden.

Bei einem weiteren bevorzugten Ausführungsbeispiel des Bohrwerkzeugs ist vorgesehen, dass die Winkelteilung der mindestens zwei Hauptschneiden asymmetrisch ist. Dies führt dazu, dass die Ratterneigung des Bohrwerkzeugs bei der Bearbeitung eines Werkstücks reduziert wird.

Die mindestens zwei Hauptschneiden sind jeweils an einem Steg des Bohrwerkzeugs angeordnet oder ausgebildet, wobei die den Hauptschneiden zugeordneten Stege bei asymmetrischer Winkelteilung der Hauptschneiden bevorzugt verschieden groß - in Umfangsrichtung gesehen - ausgebildet sind. Insbesondere ist bevorzugt wenigstens ein erster Steg, der im Bereich eines größeren Teilungswinkels angeordnet ist, wobei dieser größere Teilungswinkel größer ist als wenigstens ein anderer Teilungswinkel, größer ausgebildet als wenigstens ein anderer, zweiter Steg des Bohrwerkzeugs, wobei bevorzugt dem ersten Steg im Bereich des größeren Teilungswinkels zusätzlich zu einer ersten Führungsfase eine zweite Führungsfase zugeordnet ist. Der erste Steg weist also bevorzugt zwei - vorzugsweise in Umfangsrichtung voneinander beabstandete - Führungsfasen auf. Dass der erste Steg größer ist als wenigstens ein anderer Steg bedeutet insbesondere, dass der im Bereich des größeren Teilungswinkels angeordnete erste Steg im Vergleich zu dem wenigstens einen anderen, zweiten Steg in Umfangsrichtung gesehen verbreitert ist.

Bei einem weiteren bevorzugten Ausführungsbeispiel ist vorgesehen, dass das Bohrwerkzeug als Einsatz für einen Bohrkörper ausgebildet ist. Dadurch lässt sich ein modulares Werkzeugsystem realisieren. Es ist also leicht und insbesondere kostengünstig möglich, diesen Einsatz an verschiedene Einsatzfälle anzupassen und bei einem Verschleiß der Schneiden auszutauschen. Es ist also nicht erforderlich, das komplette Werkzeug bei Verschleiß zu entsorgen.

Schließlich wird ein Ausführungsbeispiel bevorzugt, das sich dadurch auszeichnet, dass mindestens eine Kühl- und/oder Schmiermittelversorgung vorgesehen ist. Bei der Bearbeitung eines Werkstücks wird insbesondere der mit dem Werkstück in Eingriff tretende Bereich des Bohrwerkzeugs gekühlt und/oder geschmiert, sodass einerseits der Verschleiß des Werkzeugs und andererseits die Belastung sowohl des Werkstücks als auch des Werkstücks, insbesondere deren thermische Belastung, reduziert wird.

Die Kühl- und/oder Schmiermittelversorgung ist bevorzugt als innere Kühl-/Schmiermittelversorgung ausgebildet. Insbesondere weist das Bohrwerkzeug bevorzugt wenigstens einen innenliegenden Kühl-/Schmiermittel-Kanal auf, der in eine Öffnung in der Stirnseite mündet, sodass den Hauptschneiden Kühl-/Schmiermittel über den wenigstens einen innenliegenden Kühl-/Schmiermittel-Kanal bei der Bearbeitung eines Werkstücks zugeführt werden kann. Der wenigstens eine Kühl-/Schmiermittel-Kanal mündet bevorzugt in eine Freifläche des Bohrwerkzeugs, insbesondere in eine erste Freifläche und/oder eine sich an die erste Freifläche anschließende zweite Freifläche.

Der hier beschriebene Zentrierabschnitt bewirkt nach allem eine optimale Zentrierung des Werkzeugs während der Bearbeitung eines Werkstücks. Daher sind Werkzeuge der hier angesprochenen Art für Schneidplatten oder Bohrköpfe von modularen Bohrwerkzeugen, welche einen Grundkörper aus Werkzeugstahl besitzen, besonders vorteilhaft. Derartige Grundkörper weisen nämlich eine deutlich geringere Stabilität auf, als vergleichbare Werkzeuge aus Vollhartmetall oder Vollkeramik. Daher ist die gute Eigenzentrierung des Werkzeugs besonders wichtig und vorteilhaft.

Werkzeuge mit einem Zentrierabschnitt der hier angesprochenen Art sind besonders bei Verwendung hochharter Schneidstoffe, wie Hartmetall, Schneidkeramik oder polykristallinem Diamant (PKD) vorteilhaft, weil derartige Schneidstoffe eine hervorragende Druck- und Verschleißfestigkeit aufweisen. Die Schärfe der Kanten des Zentrierabschnitts bleibt dadurch lange erhalten.

Bevorzugt weist das Bohrwerkzeug zumindest im Bereich der Hauptschneiden sowie im Bereich des Zentrierabschnitts Vollhartmetall auf oder besteht aus Vollhartmetall. Alternativ ist es möglich, dass das Bohrwerkzeug zumindest im Bereich der Hauptschneiden und des Zentrierabschnitts Vollkeramik aufweist. Vorzugsweise besteht das Bohrwerkzeug aus Vollkeramik.

Die Erfindung wird im Folgenden anhand der Zeichnung näher erläutert. Es zeigen:
- Figur 1: eine Prinzipskizze einer Stirnseitenansicht eines ersten Ausführungsbeispiels eines Metall-Bohrwerkzeugs;
- Figur 2: eine Prinzipskizze des ersten Ausführungsbeispiels in Seitenansicht (Ansicht Y);
- Figur 3: eine Prinzipskizze des ersten Ausführungsbeispiels in einer zweiten Seitenansicht (Ansicht X) und
- Figur 4: eine Prinzipskizze eines zweiten Ausführungsbeispiels eines Metall-Bohrwerkzeugs in Stirnansicht.

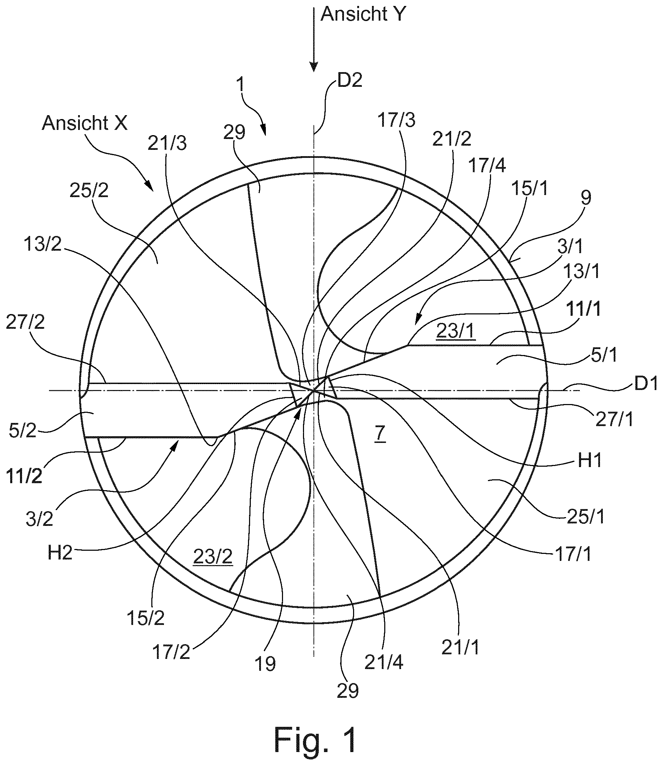

Aus der Prinzipskizze gemäß Figur 1 ist ein erstes Ausführungsbeispiel eines Metall-Bohrwerkzeugs 1 zum Einbringen von Bohrungen in metallische Werkstücke durch spanende Bearbeitung ersichtlich, welches zwei Hauptschneiden 3/1 und 3/2 umfasst. An die Hauptschneiden 3/1 und 3/2 schließen sich erste Freiflächen, nämlich eine erste erste Freifläche 5/1 und eine zweite erste Freifläche 5/2 an. Diese gehen von den Hauptschneiden 3/1 und 3/2 aus und fallen in die Bildebene hinein ab.

Figur 1 zeigt die Stirnseite 7 des im Folgenden kurz als Bohrwerkzeug oder Werkzeug bezeichneten Metall-Bohrwerkzeugs 1 in Draufsicht. In einem Abstand zur Bildebene von Figur 1 liegt das hier nicht dargestellte gegenüberliegende Ende des Bohrwerkzeugs 1.

Die ersten Freiflächen 5/1 und 5/2 erstrecken sich von einer Umfangsfläche 9 des Bohrwerkzeugs 1 aus nach innen. Dabei ist es möglich, dass die Hauptschneiden 3/1 und 3/2 unterschiedlich ausgebildete Hauptschneidenabschnitte aufweisen.

Bei dem hier dargestellten Ausführungsbeispiel sind die Hauptschneiden 3/1 und 3/2 identisch ausgebildet. Sie weisen einen äußeren ersten und einen inneren sich daran anschließenden zweiten Hauptschneidenabschnitt auf. Dies wird anhand der Hauptschneide 3/1 erläutert. Ein erster Hauptschneidenabschnitt 11/1 verläuft ausgehend von der Umfangsfläche 9 beispielhaft parallel zu einer gedachten, hier horizontal verlaufenden Durchmesserlinie D1. Dieser Hauptschneidenabschnitt 11/1 geht hier über einen Knick 13/1 in einen zweiten Hauptschneidenabschnitt 15/1 über, der unter einem spitzen Winkel in Richtung auf die Durchmesserlinie D1 abfällt. Die Hauptschneidenabschnitte 11/1 und 15/1 sind hier beispielhaft wiedergegeben. Es ist sehr wohl möglich, dass der erste Hauptschneidenabschnitt 11/1 konkav gewölbt ist, also von seinem Ausgangspunkt an der Umfangsfläche 9 sich bogenförmig der Durchmesserlinie D1 annähert und dann unter einem Bogen zu dem Knick 13 wieder ansteigt.

Die zweite Hauptschneide 3/2 ist punktsymmetrisch zur ersten Hauptschneide 3/1 ausgebildet.

Der zweite Hauptschneidenabschnitt 15/1 erreicht nicht die Mittelachse des Werkzeugs 1, die auf der Bildebene von Figur 1 senkrecht steht und im Schnittpunkt der gedachten ersten Durchmesserlinie D1 und einer gedachten vertikalen zweiten Durchmesserlinie D2 liegt.

Die Freiflächen 5/1 und 5/2 sind punktsymmetrisch ausgebildet, sodass Folgendes zur ersten ersten Freifläche 5/1 Gesagte auch für die zweite erste Freifläche 5/2 gilt.

Die erste erste Freifläche 5/1 verläuft von der Umfangsfläche 9 in Richtung auf die Mittelachse bis zu einer in Figur 1 dargestellten Hilfslinie Hl. Ab dem Bereich der Hilfslinie H1 steigt die erste erste Freifläche 5/1 in Richtung auf den Betrachter derart an, dass sie eine erste Seitenfläche 17/1 eines Zentrierabschnitts 19 bildet, die rechts und links von einer ersten Kante 21/1 und einer zweiten Kante 21/2 des Zentrierabschnitts 19 begrenzt wird. Sie läuft dabei spitz zu, wobei ihre Spitze auf der Mittelachse M liegt. Die erste Seitenfläche 17/1 und eine entsprechende, gegenüberliegende zweite Seitenfläche 17/2 der zweiten ersten Freifläche 5/2 sind gleich ausgebildet und verlaufen unter einem gleichen Winkel ausgehend von den ersten Freiflächen 5/1 und 5/2 ansteigend zur Mittelachse des Bohrwerkzeugs 1, wobei die zweite Seitenfläche 17/2 von einer dritten Kante 21/3 und einer vierten Kante 21/4 begrenzt wird. Zwischen den beiden einander gegenüberliegenden ersten und zweiten Seitenflächen 17/1 und 17/2 liegen hier eine dritte Seitenfläche 17/3 und eine vierte Seitenfläche 17/4. Die beiden einander gegenüberliegenden dritten und vierten Seitenflächen 17/3 und 17/4 bilden gemeinsam mit der ersten Seitenfläche 17/1 und der zweiten Seitenfläche 17/2 einen Zentrierabschnitt 19, der aus der Bildebene von Figur 1 und aus der Stirnseite 7 in Richtung auf den Betrachter vorspringt.

Durch die Hilfslinien H1 und H2 werden im Übergangsbereich zwischen den ersten Freiflächen 5/1 und 5/2 zu den ersten und zweiten Seitenflächen 17/1 und 17/2 des Zentrierabschnitts 19 Knicke angedeutet. Es ist aber auch möglich, dass hier ein bogenförmiger Übergang realisiert wird, über den die ersten Freiflächen 5/1 und 5/2 in die genannten Seitenflächen 17/1, 17/2 übergehen.

Es sei hier darauf hingewiesen, dass von den vier Kanten 21/1, 21/2, 21/3, 21/4 des Zentrierabschnitts 19 bei dem ersten Ausführungsbeispiel mindestens zwei auf der gedachten zweiten Kegelfläche liegen, insbesondere diejenigen Kanten, die in die zugehörigen Hauptschneiden übergehen.

In Figur 1 ist oberhalb der ersten Hauptschneide 3/1 ein erster Spanraum 23/1 zu sehen. Entsprechend ist unterhalb der zweiten Hauptschneide 3/2 ein zweiter Spanraum 23/2 zu sehen. Die Spanräume 23/1 und 23/2 dienen dazu, von den Hauptschneiden 3/1 und 3/2 abgetragene Späne abzutransportieren.

Unterhalb der ersten ersten Freifläche 5/1 ist in Figur 1 eine dieser zugeordnete erste zweite Freifläche 25/1 zu sehen. Entsprechend ist oberhalb der zweiten ersten Freifläche 5/2 eine zweite zweite Freifläche 25/2 vorgesehen. Die zweiten Freiflächen 25/1, 25/2 schließen an die den Hauptschneiden 3/1, 3/2 abgewandten Enden der ersten Freiflächen 5/1, 5/2 an. Sie sind stärker geneigt als die ersten Freiflächen 5/1 und 5/2. Die ersten und zweiten Freiflächen 5/1 und 25/1 sowie 5/2 und 25/2 gehen ineinander über, hier über einen durch eine Linie angedeuteten Knick 27/1, 27/2. Von diesen Knicken aus verlaufen die zweiten Freiflächen 25/1 und 25/2 in Richtung auf das der Stirnseite 7 gegenüberliegende, hier nicht dargestellte Ende des Werkzeugs 1. Anstelle der Knicke können auch bogenförmig ausgebildete Übergangsbereiche vorgesehen werden. Bei dem hier dargestellten Ausführungsbeispiel grenzen die Spanräume 23/1 und 23/2 nicht beziehungsweise nicht über deren ganze Länge an die zweiten Hauptschneidenabschnitte 15/1 und 15/2. Vielmehr ist hier jeweils eine Ausspitzung 29/1, 29/2 vorgesehen. Ausspitzungen sind bekannt, sodass hier nicht näher darauf eingegangen wird.

Die zweiten Hauptschneidenabschnitte 15/1 und 15/2 gehen über die zweiten und vierten Kanten 21/2 und 21/4 des Zentrierabschnitts 19 ineinander über. Es ist hier von entscheidender Bedeutung, dass herkömmliche Querschneiden entfallen und vielmehr die hier genannten Kanten 21/2 und 21/4 des aus der Bildebene von Figur 1 vorspringenden Zentrierabschnitts 19 die der Mittelachse zugewandten Enden der zweiten Hauptschneidenabschnitte 15/1 und 15/2 miteinander verbinden.

Auf jeden Fall bilden die hier genannten Kanten 21/2 und 21/4 des Zentrierabschnitts 19 Kanten, die mit einem mittels des Werkzeugs 1 bearbeiteten Werkstück in Eingriff treten. Von diesen Kanten abgetragene Späne laufen auf den zugehörigen dritten und vierten Seitenflächen 17/3 und 17/4 des Zentrierabschnitts 19 in den Bereich der Ausspitzung 29 und von da in den Bereich der Spanräume 23/1 und 23/2 ab. Dabei zeichnen sich diese Kanten 21/2, 21/4 durch einen negativen Spanwinkel aus. Die Bearbeitung des Werkstücks durch diese Kanten 21/2, 21/4 ist daher eher als schabend zu bezeichnen. Es erfolgt also hier kein positiver Spanabhub, wie dies im Bereich der Hauptschneide 3/1 beziehungsweise 3/2 der Fall ist, wo ein positiver Spanwinkel gegeben ist.

Zugleich wird das Werkzeug 1 auch durch die erste Kante 21/1 und die dritte Kante 21/3 schabend bearbeitet. Es erfolgt also insbesondere eine schabende Bearbeitung durch alle vier Kanten 21/1, 21/2, 21/3, 21/4.

Allgemein erfolgt bevorzugt eine schabende Bearbeitung mit allen Kanten des Zentrierabschnitts 19, bei den hier dargestellten Ausführungsbeispielen also insbesondere entweder mit allen vier Kanten 21/1, 21/2, 21/3, 21/4, oder mit allen drei Kanten 21/1, 21/2, 21/3.

Indem der Zentrierabschnitt 19 mit all seinen Kanten in schabenden Eingriff mit dem Werkstück tritt, kann er die Funktion einer das Bohrwerkzeug 1 stabilisierenden Gegenspitze über den gesamten Bohrvorgang wahrnehmen und so zu einer hohen Laufruhe und hohen Stabilität sowie minimalen Torsions- und Axialschwingungen beitragen. Insbesondere kann so der Zentrierabschnitt 19 als Zentrierspitze wirken.

Der anhand von Figur 1 erläuterte Zentrierabschnitt 19 erhebt sich über die Stirnseite 7 aus der Bildebene von Figur 1 heraus. Er weist eine gedachte Grundfläche auf, die im Wesentlichen rechteckförmig ist. Es ist möglich, auch Zentrierabschnitte 19 mit einer quadratischen oder parallelogrammförmigen Grundfläche zu realisieren.

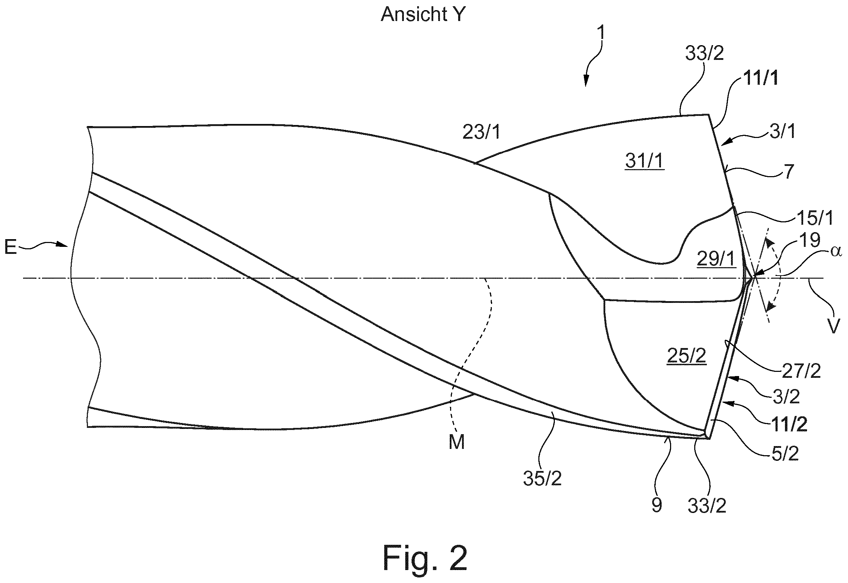

Die Prinzipskizze gemäß Figur 2 zeigt das in Figur 1 wiedergegebene erste Ausführungsbeispiel des Bohrwerkzeugs 1 in einer ersten Seitenansicht, nämlich als Ansicht Y, deren Ausrichtung in Figur 1 angedeutet ist.

Gleiche und funktionsgleiche Teile sind mit gleichen Bezugszeichen versehen, sodass insofern auf die Beschreibung zu Figur 1 verwiesen wird.

Aus der Prinzipskizze gemäß Figur 2 ist in der hier dargestellten ersten Ansicht oberhalb der Mittellinie M die erste Hauptschneide 3/1 zu sehen, außerdem deren den ersten Spanraum 23/1 begrenzende erste Spanfläche 31/1, welche dem ersten Hauptschneidenabschnitt 11/1 sowie einem Teil des zweiten Hauptschneidenabschnitts 15/1 zugeordnet ist. Darüber hinaus ist die Ausspitzung 29/1 zu erkennen, welche die Spanfläche für den übrigen Teil des zweiten Hauptschneidenabschnitts 15/1 bildet. Von der ersten Hauptschneide 3/1 abgetragene Späne werden also von der ersten Spanfläche 31/1 sowie von der Ausspitzung 29/1 in den ersten Spanraum 23/1 geleitet. Auch diese Ausgestaltung ist punktsymmetrisch für die zweite Hauptschneide 3/2 vorgesehen.

Unterhalb der Mittellinie M ist die zweiten Hauptschneide 3/2 zu sehen, an welche sich nach links die zweite erste Freifläche 5/2 anschließt. Diese geht über den Knick 27/2 in die zweite zweite Freifläche 25/2 über.

Aus Figur 2 ist ersichtlich, dass bei diesem Ausführungsbeispiel die erste und zweite Hauptschneide 3/1 und 3/2 gegenüber einer Ebene, auf welcher die Mittelachse M senkrecht steht, nach links in Richtung auf das der Stirnseite 7 gegenüberliegende Ende E abfallen. Die beiden Hauptschneiden 3/1, 3/2 liegen auf einer gedachten ersten Kegelfläche, die einen sich in Richtung auf das gegenüberliegende Ende E öffnenden ersten Kegelwinkel α aufweist. Aus Gründen der besseren Übersichtlichkeit ist der erste Kegelwinkel α hier mittels Hilfslinien angegeben, die an den ersten Hauptschneidenabschnitten 11/1 und 11/2 anliegen, die in einem größeren Abstand zur Mittelachse M liegen, als die in Figur 1 wiedergegebenen zweiten Hauptschneidenabschnitte 15/1 und 15/2.

Es wird hier ausdrücklich darauf hingewiesen, dass bei einem hier nicht dargestellten Ausführungsbeispiel die beiden Hauptschneiden 3/1 und 3/2 auch in einer gedachten Ebene liegen können, auf welcher die Mittelachse M senkrecht steht, wobei der erste Kegelwinkel α dann 180° beträgt.

Aus Figur 2 ist zu erkennen, dass der konzentrisch zur Mittelachse M liegende Zentrierabschnitt 19 - von dem der Stirnseite 7 gegenüberliegenden Ende E aus gesehen - aus der Stirnseite 7 vorspringt, also in Richtung der Vorschubrichtung, die durch einen Pfeil V angedeutet ist. In diese Richtung bewegt sich das Bohrwerkzeug 1 gegenüber einem zu bearbeitenden, hier nicht dargestellten Werkstück, wenn dort eine Bohrung eingebracht werden soll. Grundsätzlich ist es möglich, das Werkstück in Rotation zu versetzen und relativ zum - in Richtung der Mittelachse M gesehen - feststehenden Bohrer zu bewegen, um dort eine Bohrung einzubringen. Hier wird jedoch davon ausgegangen, dass sich der Bohrer gegenüber dem Werkstück um die Mittelachse M dreht und in Richtung des Pfeils V, also in Vorschubrichtung, bewegt, und dass der Zentrierabschnitt 19 in diese Richtung aus der Stirnseite 7 vorspringt.

An die Hauptschneiden 3/1 und 3/2 schließen sich außen im Bereich der Umfangsfläche 9 jeweils Nebenschneiden 33/1 und 33/2 an, denen Führungsflächen 35/1 und 35/2 zugeordnet sind, von denen hier lediglich die zweite Führungsfläche 35/2 der zweiten Nebenschneide 33/2 zu erkennen ist. Die Führungsflächen 35/1, 35/2 können durch sich an die Nebenschneiden 33/1, 33/2 anschließende ebene Flächen oder durch sogenannte Rundschlifffasen gebildet werden.

Über diese Flächen stützt sich das Bohrwerkzeug 1 bei der Bearbeitung eines Werkstücks ab. Führungsflächen der hier angesprochenen Art sind bekannt, sodass hier nicht näher darauf eingegangen wird.

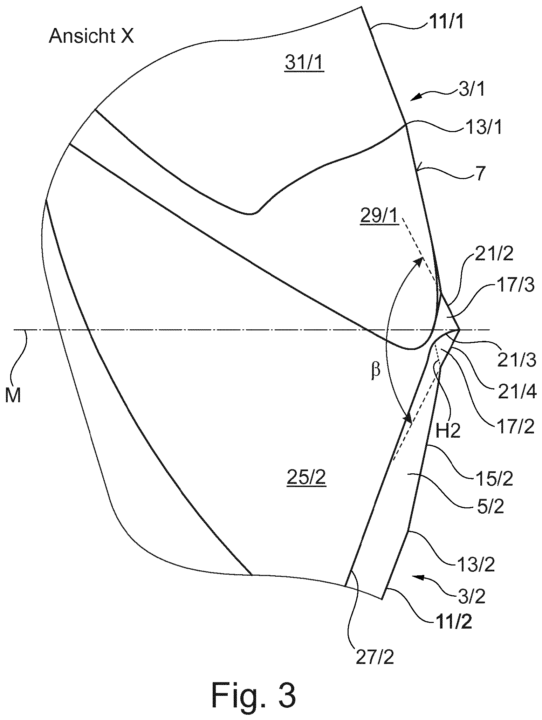

Figur 3 zeigt in einer Prinzipskizze das erste Ausführungsbeispiel des Bohrwerkzeugs 1 in einer zweiten Seitenansicht, die gemäß den Angaben in Figur 1 auch als Ansicht X bezeichnet wird.

In Figur 3 ist das vordere Ende, also das die Stirnseite 7 aufweisende Ende, vergrößert wiedergegeben. Gleiche und funktionsgleiche Elemente sind mit gleichen Bezugszeichen versehen, sodass insofern auf die vorangegangene Beschreibung verwiesen wird.

Unterhalb der Mittellinie M ist die zweite Hauptschneide 3/2 zu sehen, außerdem deren erste Freifläche 5/2 und die sich über den Knick 27/2 anschließende zweite Freifläche 25/2.

Oberhalb der Mittellinie M ist die erste Hauptschneide 3/1 mit dem äußeren, ersten Hauptschneidenabschnitt 11/1 zu erkennen, wobei mit dem Begriff "äußeren" angegeben wird, dass dieser erste Hauptschneidenabschnitt 11/1 in einem größeren Abstand zur Mittelachse M angeordnet ist, als der zweite Hauptschneidenabschnitt 15/1.

Die Darstellung gemäß Figur 3 lässt erkennen, dass sich an den ersten Hauptschneidenabschnitt 11/1 die erste Spanfläche 31/1 anschließt, welche den ersten Spanraum 23/1 begrenzt. An den zweiten Hauptschneidenabschnitt 15/1 oberhalb der Mittellinie M schließt sich die Ausspitzung 29/1 an, deren Seitenwand zumindest bereichsweise die Spanfläche für diesen zweiten Hauptschneidenabschnitt 15/1 bildet.

Aus der vergrößerten Darstellung von Figur 3 ist deutlich zu erkennen, dass der Zentrierabschnitt 19 über die Stirnseite 7 hinausragt, sodass bei Verwendung des hier dargestellten Werkzeugs 1 der Zentrierabschnitt 19 als erstes mit einem Werkstück in Eingriff tritt, wenn in dieses eine Bohrung mittels des Bohrwerkzeugs 1 eingebracht werden soll.

Die Ansicht gemäß Figur 3, also die Ansicht X, die in Figur 1 angedeutet ist, zeigt die dritte Seitenfläche 17/3 des Zentrierabschnitts 19, welche durch die dritte Kante 21/3 und die zweite Kante 21/2 begrenzt wird. Unterhalb der dritten Kante 21/3 ist die zweite Seitenfläche 17/2 zu sehen, außerdem die Hilfslinie H2.

Anhand von Figur 1 wurde erläutert, dass sich die ersten Freiflächen 5/1 und 5/2 über einen durch die Hilfslinien Hl, H2 angedeuteten Knick oder einen gebogenen Bereich in die ersten und zweiten Seitenflächen 17/1 und 17/2 des Zentrierabschnitts 19 fortsetzen. Die Ansicht gemäß Figur 3 lässt erkennen, dass sich die zweite erste Freifläche 5/2 in die zweite Seitenfläche 17/2 fortsetzt. Auf der dem Betrachter abgewandten Seite des Zentrierabschnitts 19 befindet sich die vierte Seitenfläche 17/4.

Oberhalb der Mittellinie M setzt sich die erste Hauptschneide 3/1 ausgehend von dem ersten Hauptschneidenabschnitt 11/1 über den zweiten Hauptschneidenabschnitt 15/1 in die zweite Kante 21/2 des Zentrierabschnitts 19 fort. Aus der Draufsicht gemäß Figur 1 ist zu sehen, dass sich die zweite Kante 21/2 über die Mittelachse hinweg in die vierte Kante 21/4 fortsetzt.

Die zweite Kante 21/2 schließt gemeinsam mit der gegenüberliegenden, die Fortsetzung der zweiten Hauptschneide 3/2 bildenden vierten Kante 21/4 einen Winkel ein, der dem zweiten Kegelwinkel β der gedachten zweiten Kegelfläche entspricht.

Aus der Prinzipskizze gemäß Figur 3 ist ohne weiteres ersichtlich, dass der in Figur 2 wiedergegebene erste Kegelwinkel α und der hier in Figur 3 angedeutete zweite Kegelwinkel β unterschiedlich groß sind, es gilt nämlich, dass der erste Kegelwinkel α größer als der zweite Kegelwinkel β ist. Dadurch erhebt sich der Zentrierabschnitt 19 mit einem kleineren zweiten Kegelwinkel β über die Stirnfläche 7 hier in Figur 3 nach rechts und bildet eine Zentrierspitze.

Zum ersten Ausführungsbeispiel des Bohrers 1, wie er in den Figuren 1 bis 3 dargestellt ist, ist noch Folgendes zusammenfassend und ergänzend festzuhalten:
Für den ersten Kegelwinkel α gilt, dass dieser in einem Bereich von 120° ≤ α ≤ 180°, insbesondere ein einem Bereich von 120° ≤ α < 180° gewählt wird, vorzugsweise in einem Bereich von 130° ≤ α ≤ 150°.

Für den zweiten Kegelwinkel β gilt, dass dieser kleiner als der Winkel ist, welchen die Hauptschneiden miteinander einschließen, also kleiner als 180° ist, wenn die Hauptschneiden 3/1 und 3/2 in einer gedachten Ebene liegen, oder kleiner als der erste Kegelwinkel α ist, wenn die Hauptschneiden 3/1 und 3/2 auf einer gedachten Kegelfläche mit Öffnungswinkel < 180° liegen. Außerdem ist für den zweiten Kegelwinkel vorgesehen, dass er in einem Bereich von 80° ≤ β ≤ 150°, vorzugsweise in einem Bereich von 90° ≤ β ≤ 140° liegt.

Für das hier dargestellte Ausführungsbeispiel mit einem Zentrierabschnitt 19, der vier Kanten 21/1 bis 21/4 aufweist, gilt, dass die zwischen den Kanten liegenden Seitenflächen 17/1 bis 17/4 paarweise einander gegenüberliegend angeordnet sind. Dabei schließen die ersten und zweiten Seitenflächen 17/1 und 17/2, die den ersten Freiflächen 5/1 und 5/2 zugeordnet sind, einen Winkel zwischen sich ein, der sich in Richtung auf das der Stirnseite 7 gegenüberliegende Ende des Bohrers 1 öffnet. Dieser Öffnungswinkel wird als γ bezeichnet. Für ihn gilt, dass er in einem Bereich von 60° ≤ y ≤ 150°, insbesondere von 80° ≤ γ ≤ 120° liegt. Vorzugsweise schließen beide paarweise gegenüberliegenden Seitenflächen 17/1, 17/2, 17/3, 17/4 diesen Winkel γ zwischen sich ein, wobei insbesondere vorgesehen ist, dass die beiden Seitenflächenpaare jeweils den gleichen Winkel zwischen sich einschließen.

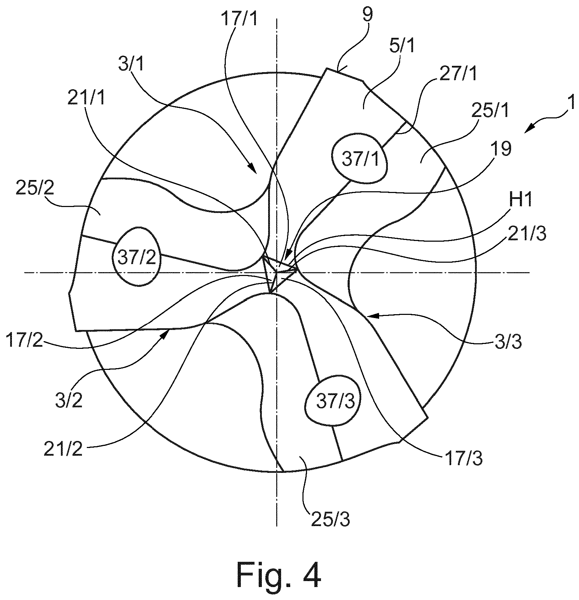

Figur 4 zeigt in einer Prinzipskizze eine Draufsicht auf die Stirnseite 7 eines zweiten Ausführungsbeispiels eines Metall-Bohrwerkzeugs 1, welches auch hier verkürzt als Bohrwerkzeug 1 bezeichnet wird. Während die Figuren 1 bis 3 ein Bohrwerkzeug 1 mit zwei Hauptschneiden 3/1, 3/2 wiedergeben, ist hier in Figur 4 ein Bohrwerkzeug 1 in Stirnseitenansicht dargestellt, welches drei Hauptschneiden 3/1, 3/2, 3/3 aufweist. Alle drei Hauptschneiden 3/1, 3/2, 3/3 sind gemeinsam mit den zugehörigen Freiflächen, Spanflächen und dergleichen identisch ausgebildet, sodass die folgenden Erläuterungen sich auf eine erste Hauptschneide 3/1 beziehen. In Figur 4 sind beiden anderen Hauptschneiden mit 3/2 und 3/3 gekennzeichnet. Die entsprechenden Elemente, die den Hauptschneiden zugeordnet werden, tragen die entsprechenden Zahlenangaben, beispielsweise 5/1 für die erste Freifläche der ersten Hauptschneide 3/1, 5/2 für die erste Freifläche der zweiten Hauptschneide 3/2 und 5/3 für die erste Freifläche der dritten Hauptschneide 3/3.

Die Hauptschneiden 3/1, 3/2, 3/3 erstrecken sich von einer Umfangsfläche 9 des Bohrwerkzeugs 1 und verlaufen von dieser geradlinig, wie hier dargestellt, oder entlang einer konkaven Linie und bilden hier jeweils einen ersten Hauptschneidenabschnitt 11/1 aus. Über einen Knick 13/1 setzt sich der erste Hauptschneidenabschnitt 11/1 in einem zweiten Hauptschneidenabschnitt 15/1 fort, der schließlich an einem Zentrierabschnitt 19 endet. Dieser weist hier eine dreieckförmige Grundfläche auf.

Die erste Hauptschneide 3/1 setzt sich in eine der Kanten, hier in die erste Kante 21/1 des Zentrierabschnitts 19 fort. Diese verläuft wie bei dem ersten Ausführungsbeispiel unter einem Knick oder bogenförmig aus der Ebene, in welcher das Ende des zweiten Hauptschneidenabschnitts 15/1 liegt, derart, dass sich die erste Kante 21/1 aus der Bildebene von Figur 4 in Richtung auf den Betrachter erhebt.

Entsprechend setzt sich die zweite Hauptschneide 3/2 in die zweite Kante 21/2 fort und die dritte Hauptschneide 3/3 in die dritte Kante 21/3 des Zentrierabschnitts 19.

An die Hauptschneiden 3/1, 3/2, 3/3 schließen sich Freiflächen an. Dabei ist das zweite Ausführungsbeispiel des Bohrers 1 entsprechend dem gemäß den vorangegangenen Figuren ausgebildet: An die erste Hauptschneide 3/1 schließt sich die erste Freifläche 5/1 an, die ausgehend von der ersten Hauptschneide 3/1 in die Bildebene von Figur 4 hinein abfällt, also in Richtung des hier nicht dargestellten, der Stirnseite 7 gegenüberliegenden Endes.

Auch hier gibt es eine zweite Freifläche 25/1, die sich über einen Knick 27/1 ausgehend von der ersten Freifläche 5/1 fortsetzt und ihrerseits ausgehend von dem Knick 27/1 in die Bildebene von Figur 4 abfällt, wobei die zweite Freifläche 25/1 stärker geneigt ist, als die erste Freifläche 5/1.

Die erste Freifläche 5/1 geht von der Umfangsfläche 9 aus und erstreckt sich bis zum Zentrierabschnitt 19. Durch eine Hilfslinie Hl ist angedeutet, dass die erste Freifläche 5/1 über einen Knick in eine erste Seitenfläche 17/1 des Zentrierabschnitts 19 übergeht. Es ist auch möglich, dass kein Knick, sondern ein nach oben auf den Betrachter zu gebogener Bereich im Übergang zwischen der ersten Freifläche 5/1 und der ersten Seitenfläche 17/1 vorgesehen ist.

Entsprechendes gilt für die weiteren Seitenflächen 17/2 und 17/3 des Zentrierabschnitts 19. Insgesamt wird hier ein Zentrierabschnitt 19 mit drei Kanten 21/1, 21/2 und 21/3 gebildet, wobei zwischen den Kanten 21/1, 21/2, 21/3 die Seitenflächen 17/1, 17/2 und 17/3 vorgesehen sind.

Bei dem hier dargestellten Ausführungsbeispiel gemäß Figur 4 ist vorgesehen, dass die Hauptschneiden 3/1 bis 3/3 zumindest abschnittsweise auf einer gedachten ersten Kegelfläche angeordnet sind, die einen sich in Richtung auf das der Stirnseite 7 gegenüberliegende Ende E öffnenden ersten Kegelwinkel α aufweist.

Es ist aber auch möglich, ein hier nicht dargestelltes Ausführungsbeispiel zu realisieren, bei welchem die drei Hauptschneiden 3/1, 3/2, 3/3 in einer gedachten Ebene liegen, auf welcher die Mittelachse M senkrecht steht.

Im Bereich des Zentrierabschnitts 19 ist vorgesehen, dass hier alle drei Kanten 21/1 bis 21/3 auf einer gedachten zweiten Kegelfläche liegen, die einen zweiten, sich in Richtung auf das der Stirnfläche 7 gegenüberliegende Ende E öffnenden zweiten Kegelwinkel β aufweist. Für die Winkel α und β gilt das zu dem ersten Ausführungsbeispiel Gesagte entsprechend.

Es hat sich herausgestellt, dass die Spitze des Zentrierabschnitts 19, der als Zentrierspitze für das Bohrwerkzeug 1 wirkt, bei einem kleinen zweiten Kegelwinkel β ziemlich empfindlich ist und abbrechen kann. In diesem Fall ist es möglich, die Spitze des Zentrierabschnitts 19 etwas abzuflachen und hier eine vorzugsweise sehr kurze Querschneide vorzugsehen, welche zwischen den Kanten 21/1, 21/2, 21/3 des Zentrierabschnitts 19 angeordnet ist, die in die mindestens zwei Hauptschneiden 3/1, 3/2, 3/3 übergehen. Auch hier gilt, dass die Querschneide höchstens 6 %, insbesondere höchstens 2 % des Werkzeugdurchmessers ausmacht.

Bevorzugt ist bei Bohrwerkzeugen 1 der hier angesprochenen Art vorgesehen, dass ein Durchmesser des Umkreises um die Grundfläche des Zentrierabschnitts 19 wesentlich kleiner ist als der Durchmesser dieses Bohrwerkzeugs 1. Besonders bewährt hat sich, den Durchmesser des Umkreises in einem Bereich von 2 % bis 15 %, insbesondere von 5 % bis 12 % des Bohrerdurchmessers zu wählen.

In der Praxis finden sich auch Werkzeuge, die einen Bohrkörper aufweisen, der im Bereich der Stirnseite 7 mit einem entlang einer Durchmesserlinie verlaufenden Schlitz versehen ist. In diesem wird ein Einsatz eingebracht, der die Schneiden und sonstige Merkmale des oben erläuterten Werkzeugs aufweist. Mit anderen Worten, es kann sehr wohl vorgesehen werden, ein Bohrwerkzeug 1 mit den hier dargestellten Merkmalen als Einsatz für einen Bohrkörper auszubilden.

Darüber hinaus ist es schließlich möglich, sowohl bei dem ersten Ausführungsbeispiel nach den Figuren 1 bis 3 als auch bei dem zweiten Ausführungsbeispiel gemäß Figur 4 mindestens eine Kühl- und/oder Schmiermittelversorgung vorzusehen. Über diese wird bei Verwendung des Werkzeugs 1 ein Kühl- und/oder Schmiermittel unter Druck zugeführt. Dabei sind bevorzugt Öffnungen, hier in der Stirnseite 7, vorgesehen, durch welche das Kühl-/Schmiermittel bei der Bearbeitung eines Werkstücks den Schneiden zugeführt wird, um diese zu schmieren und zu kühlen. In Figur 4 sind beispielhaft drei Öffnungen 37/1 bis 37/3 vorgesehen, über die das von der Kühl-/Schmiermittelversorgung bereitgestellte Kühl-/Schmiermittel austreten kann.

Derartige Öffnungen 37/1, 37/2, 37/3 können auch bei dem Ausführungsbeispiel gemäß Figur 1 bis 3 vorgesehen werden. Sie sind allerdings in diesen Figuren nicht dargestellt.

Der Zentrierabschnitt 19 ist bevorzugt koaxial zu der Mittelachse M angeordnet. Insbesondere ist die Spitze des Zentrierabschnitts 19 bevorzugt auf der Mittelachse M angeordnet.

Es wird ein Ausführungsbeispiel des Bohrwerkzeugs 1 bevorzugt, bei dem der Zentrierabschnitt 19 eine quadratische Grundfläche mit vier vorzugsweise gleichen Seitenflächen aufweist.

Bei dem in Figur 4 dargestellten, zweiten Ausführungsbeispiel weist der Zentrierabschnitt 19 eine Grundfläche auf, die ein gleichseitiges Dreieck ist, wobei er bevorzugt drei gleiche Seitenflächen aufweist, die bevorzugt ebenfalls gleichseitige Dreiecke - bevorzugt von gleicher Größe wie die Grundfläche - sind.

## Patentansprüche

1. Metall-Bohrwerkzeug (1) zum Einbringen von Bohrungen in metallische Werkstücke durch spanende Bearbeitung, mit
- einer Mittelachse (M),
- einer Umfangsfläche (9),
- einer Stirnseite (7) und einem gegenüberliegenden Ende (E),
- mit mindestens zwei im Bereich der Stirnseite (7) angeordneten Hauptschneiden (3/1,3/2), denen jeweils eine erste Freifläche (5/1,5/2) zugeordnet ist, wobei
- die Freiflächen (5/1,5/2) von den mindestens zwei Hauptschneiden (3/1,3/2) unter einem ersten Freiwinkel in Richtung auf das gegenüberliegende Ende (E) abfallen, und
- von der Umfangsfläche (9) ausgehend über die Stirnseite (7) verlaufen, wobei
- die mindestens zwei Hauptschneiden (3/1,3/2) auf einer gedachten, konzentrisch zur Mittelachse (M) angeordneten ersten Kegelfläche liegen, die einen sich in Richtung auf das gegenüberliegende Ende (E) öffnenden ersten Kegelwinkel (α) aufweist, der höchstens 180° beträgt,
**gekennzeichnet durch**
- einen Zentrierabschnitt (19) mit mindestens drei Kanten (21/1,21/2,21/3), mindestens drei Seitenflächen (17/1,17/2,17/3) und einer gedachten Grundfläche, wobei der Zentrierabschnitt (19) statt einer Querschneide an dem Bohrwerkzeug (1) vorgesehen ist, so dass er die Querschneide ersetzt, wobei
- mindestens zwei der Kanten (21/1,21/2,21/3,21/4) auf einer gedachten, konzentrisch zur Mittelachse (M) angeordneten zweiten Kegelfläche liegen, welche einen sich in Richtung auf das gegenüberliegende Ende (E) öffnenden zweiten Kegelwinkel (β) aufweist, wobei
- der zweite Kegelwinkel (β) kleiner ist als der erste Kegelwinkel (α),
- sodass die gedachte zweite Kegelfläche - von dem gegenüberliegenden Ende (E) aus gesehen - gegenüber der Stirnseite (7) vorspringt wobei
- die mindestens zwei Hauptschneiden (3/1,3/2) jeweils einen äußeren ersten Hauptschneidenabschnitt (11/1,11/2) und einen sich daran anschließenden inneren zweiten Hauptschneidenabschnitt (15/1,15/2) aufweisen, und wobei
- sich die mindestens zwei Hauptschneiden (3/1,3/2) jeweils in eine der Kanten (21/1,21/2,21/3,21/4) des Zentrierabschnitts (19) fortsetzen.

2. Bohrwerkzeug (1) nach Anspruch 1, **dadurch gekennzeichnet, dass** die gedachte Grundfläche ein regelmäßiges und/oder punktsymmetrisches Polygon ist, wobei ein Mittelpunkt und/oder Symmetriezentrum dieses Polygons bevorzugt zugleich der Fußpunkt einer Höhe des Zentrierabschnitts, insbesondere einer Spitze desselben, ist.

3. Bohrwerkzeug (1) nach einem der Ansprüche 1 oder 2, **dadurch gekennzeichnet, dass** der Zentrierabschnitt (19) koaxial zu der Mittelachse (M) angeordnet ist, wobei insbesondere eine Spitze des Zentrierabschnitts (19) auf der Mittelachse (M) liegt.

4. Bohrwerkzeug (1) nach einem der vorhergehenden Ansprüche, **dadurch gekennzeichnet, dass** die gedachte Grundfläche des Zentrierabschnitts (19) als gleichseitiges Dreieck oder als Quadrat ausgebildet ist.

5. Bohrwerkzeug (1) nach einem der vorhergehenden Ansprüche, **dadurch gekennzeichnet, dass**
- das Bohrwerkzeug (1) drei Hauptschneiden (3/1,3/2,3/3) aufweist, wobei der Zentrierabschnitt (19) drei Kanten (21/1,21/2,21/3) und drei Seitenflächen (17/1,17/2,17/3) aufweist, wobei
- die drei Hauptschneiden (3/1,3/2,3/3) über einen Knick oder über einen gebogenen Bereich in die drei Kanten (21/1,21/2,21/3) des Zentrierabschnitts (19) übergehen, wobei
- die Freiflächen (5/1,5/2,5/3) der Hauptschneiden (3/1,3/2,3/3) über einen Knick oder über einen gebogenen Bereich in die Seitenflächen (17/1,17/2,17/3) des Zentrierabschnitts (19) übergehen, wobei
- alle drei Kanten (21/1,21/2,21/3) des Zentrierabschnitts (19) auf der gedachten zweiten Kegelfläche liegen, und wobei
- die gedachte Grundfläche des Zentrierabschnitts (19) dreieckig ist.

6. Bohrwerkzeug (1) nach einem der vorhergehenden Ansprüche 1 bis 4, **dadurch gekennzeichnet, dass**
- das Bohrwerkzeug (1) zwei Hauptschneiden (3/1,3/2) aufweist, wobei der Zentrierabschnitt (19) vier Kanten (21/1,21/2,21/3,21/4) und vier Seitenflächen (17/1,17/2;17/3,17/4) aufweist, wobei
- die zwei Hauptschneiden (3/1,3/2) über einen Knick oder über einen gebogenen Bereich in zwei gegenüberliegende Kanten (21/2,21/4) des Zentrierabschnitts (19) übergehen, wobei
- die zwei Freiflächen (5/1,5/2) über einen Knick oder über einen gebogenen Bereich in zwei gegenüberliegende Seitenflächen (17/1,17/2) des Zentrierabschnitts (19) übergehen, wobei
- die gedachte Grundfläche des Zentrierabschnitts (19) viereckig ist, und wobei
- mindestens zwei Kanten des Zentrierabschnitts (19), insbesondere die sich an die zwei Hauptschneiden (3/1,3/2) anschließenden Kanten (21/2,21/4), auf der zweiten Kegelfläche liegen.

7. Bohrwerkzeug (1) nach einem der vorhergehenden Ansprüche, **dadurch gekennzeichnet, dass** sich an ein von den mindestens zwei Hauptschneiden (3/1,3/2,3/3) abgewandtes Ende der ersten Freifläche (5/1,5/2,5/3) jeweils eine zweite Freifläche (25/1,25/2,25/3) anschließt, die von dem Ende unter einem zweiten Freiwinkel in Richtung auf das gegenüberliegende Ende (E) abfallen.

8. Bohrwerkzeug (1) nach einem der vorhergehenden Ansprüche, **dadurch gekennzeichnet, dass**
- für den ersten Kegelwinkel (α) gilt: 120° ≤ α < 180°, vorzugsweise 130° ≤ α ≤ 150°, und/oder dass
- für den zweiten Kegelwinkel (β) gilt: β < 180°, β < α und vorzugsweise 80° ≤ β ≤ 150°, insbesondere 90° ≤ β ≤ 140°, und/oder dass
- die drei Seitenflächen (17/1,17/2,17/3) des Zentrierabschnitts (19) mit der Mittelachse (M) einen - vorzugsweise gleichen - Winkel (δ) einschließen, der im Bereich von 25° ≤ δ ≤ 60° liegt, insbesondere im Bereich von 35° ≤ δ ≤ 55°.

9. Bohrwerkzeug (1) nach einem der vorhergehenden Ansprüche 6 bis 8, **dadurch gekennzeichnet, dass** paarweise gegenüberliegende Seitenflächen (17/1,17/2;17/3,17/4) des Zentrierabschnitts (19) einen sich zum gegenüberliegenden Ende (E) öffnenden Winkel (γ) einschließen, für den Folgendes gilt: 60° ≤ γ ≤ 150°, insbesondere 80° ≤ γ ≤ 120°, wobei vorzugsweise beide Paare der gegenüberliegenden Seitenflächen denselben Winkel (γ) einschließen.

10. Bohrwerkzeug (1) nach einem der vorhergehenden Ansprüche 5 bis 9, **dadurch gekennzeichnet, dass** mindestens eine der Seitenflächen (17/1,17/2) des Zentrierabschnitts (19) mit einer Ausspitzung (29) versehen ist.

11. Bohrwerkzeug (1) nach einem der vorhergehenden Ansprüche, **dadurch gekennzeichnet, dass** die entlang einer gedachten Durchmesserlinie (D1) gemessene Breite der gedachten Grundfläche des Zentrierabschnitts (19) kleiner ist als der Durchmesser des Bohrwerkzeugs (1), insbesondere 5 % bis 12 % ausmacht.

12. Bohrwerkzeug (1) nach einem der vorhergehenden Ansprüche, **dadurch gekennzeichnet, dass** den mindestens zwei Hauptschneiden (3/1,3/2) jeweils eine Nebenschneide (33) im Bereich der Umfangsfläche (9) des Bohrwerkzeugs (1) zugeordnet ist.

13. Bohrwerkzeug (1) nach einem der vorhergehenden Ansprüche, **dadurch gekennzeichnet, dass** die Winkelteilung der mindestens zwei Hauptschneiden (3/1,3/2,3/3) asymmetrisch ist.

14. Bohrwerkzeug (1) nach einem der vorhergehenden Ansprüche, **dadurch gekennzeichnet, dass** es als Einsatz für einen Bohrkörper ausgebildet ist.

## Claims

1. Metal drilling tool (1) for drilling holes in metal workpieces by chip removal, having
- a middle axis (M),
- a circumferential surface (9),
- a front side (7) and an opposing end (E),
- with at least two primary cutting edges (3/1,3/2) arranged in the region of the front side (7), with each of which a first clearance surface (5/1,5/2) is associated, wherein
- the clearance surfaces (5/1,5/2) drop off from the at least two primary cutting edges (3/1,3/2) at a first clearance angle in the direction of the opposing end (E), and
- extend from the circumferential surface (9) over the front side (7), wherein
- the at least two primary cutting edges (3/1,3/2) lie on an imaginary first conical surface which is arranged concentrically with respect to the middle axis (M) and has a first cone angle (α) which opens in the direction of the opposing end (E) and is at most 180°,
**characterised by**
- a centering portion (19) having at least three edges (21/1,21/2,21/3), at least three side surfaces (17/1,17/2,17/3) and an imaginary base surface, wherein the centering portion (19) is provided instead of a transverse cutting edge on the drilling tool (1) such that it replaces the transverse cutting edge, wherein
- at least two of the edges (21/1,21/2,21/3,21/4) lie on an imaginary second conical surface which is arranged concentrically with respect to the middle axis (M) and has a second cone angle (β) which opens in the direction of the opposing end (E), wherein
- the second cone angle (β) is smaller than the first cone angle (α),
- so that the imaginary second conical surface - viewed from the opposing end (E) - protrudes from the front side (7), wherein
- the at least two primary cutting edges (3/1,3/2) each have an outer first primary cutting edge portion (11/1,11/2) and an adjoining inner second primary cutting edge portion (15/1,15/2), and wherein
- the at least two primary cutting edges (3/1,3/2) each continue into one of the edges (21/1,21/2,21/3,21/4) of the centering portion (19).

2. Drilling tool (1) according to claim 1, **characterised in that** the imaginary base surface is a regular and/or point-symmetrical polygon, wherein a midpoint and/or centre of symmetry of this polygon is preferably simultaneously the base point of a height of the centering portion, in particular of a tip thereof.

3. Drilling tool (1) according to one of claims 1 or 2, **characterised in that** the centering portion (19) is arranged coaxially with the middle axis (M), wherein in particular a tip of the centering portion (19) lies on the middle axis (M).

4. Drilling tool (1) according to one of the preceding claims, **characterised in that** the imaginary base surface of the centering portion (19) is configured as an equilateral triangle or as a square.

5. Drilling tool (1) according to one of the preceding claims, **characterised in that**
- the drilling tool (1) has three primary cutting edges (3/1,3/2,3/3), wherein the centering portion (19) has three edges (21/1,21/2,21/3) and three side surfaces (17/1,17/2,17/3), wherein
- the three primary cutting edges (3/1,3/2,3/3) transition via a bend or via a bent region into the three edges (21/1,21/2,21/3) of the centering portion (19), wherein
- the clearance surfaces (5/1,5/2,5/3) of the primary cutting edges (3/1,3/2,3/3) transition via a bend or via a bent region into the side surfaces (17/1,17/2,17/3) of the centering portion (19), wherein
- all three edges (21/1,21/2,21/3) of the centering portion (19) lie on the imaginary second conical surface, and wherein
- the imaginary base surface of the centering portion (19) is triangular.

6. Drilling tool (1) according to one of the preceding claims 1 to 4, **characterised in that**
- the drilling tool (1) has two primary cutting edges (3/1,3/2), wherein the centering portion (19) has four edges (21/1,21/2;21/3,21/4) and four side surfaces (17/1,17/2;17/3,17/4), wherein
- the two primary cutting edges (3/1,3/2) transition via a bend or via a bent region into two opposing edges (21/2,21/4) of the centering portion (19), wherein
- the two clearance surfaces (5/1,5/2) transition via a bend or via a bent region into two opposing side surfaces (17/1,17/2) of the centering portion (19), wherein
- the imaginary base of the centering portion (19) is quadrangular, and wherein
- at least two edges of the centering portion (19), in particular the edges (21/2, 21/4) adjoining the two primary cutting edges (3/1, 3/2), lie on the second conical surface.

7. Drilling tool (1) according to one of the preceding claims, **characterised in that** a second clearance surface (25/1,25/2,25/3) adjoins each of the ends of the first clearance surface (5/1,5/2,5/3) facing away from the at least two primary cutting edges (3/1,3/2,3/3), which drop off from the end at a second clearance angle in the direction of the opposing end (E).

8. Drilling tool (1) according to one of the preceding claims, **characterised in that**
- for the first cone angle (α) applies: 120° ≤ α < 180°, preferably 130° ≤ α ≤ 150°, and/or that
- for the second cone angle (β) applies: β < 180°, β < α and preferably 80° ≤ β ≤ 150°, in particular 90° ≤ β ≤ 140°, and/or **in that**
- the three side surfaces (17/1,17/2,17/3) of the centering portion (19) enclose with the middle axis (M) an - preferably equal - angle (δ) which is in the range of 25° ≤ δ ≤ 60°, in particular in the range of 35° ≤ δ ≤ 55°.

9. Drilling tool (1) according to any of the preceding claims 6 to 8, **characterised in that** opposing side surfaces (17/1,17/2;17/3,17/4) in pairs of the centering portion (19) enclose an angle (γ) which opens to the opposing end (E), for which the following applies: 60° ≤ γ ≤ 150°, in particular 80° ≤ γ ≤ 120°, wherein preferably both pairs of the opposing side surfaces enclose the same angle (γ).

10. Drilling tool (1) according to one of the preceding claims 5 to 9, **characterised in that** at least one of the side surfaces (17/1,17/2) of the centering portion (19) is provided with a gash (29).

11. Drilling tool (1) according to one of the preceding claims, **characterised in that** the width of the imaginary base surface of the centering portion (19) measured along an imaginary diameter line (D1) is smaller than the diameter of the drilling tool (1), in particular makes up 5% to 12%.

12. Drilling tool (1) according to one of the preceding claims, **characterised in that** the at least two primary cutting edges (3/1,3/2) are each associated with a secondary cutting edge (33) in the region of the circumferential surface (9) of the drilling tool (1).

13. Drilling tool (1) according to one of the preceding claims, **characterised in that** the angular pitch of the at least two primary cutting edges (3/1,3/2,3/3) is asymmetrical.

14. Drilling tool (1) according to one of the preceding claims, **characterised in that** it is configured as an insert for a drill body.

## Revendications

1. Outil de perçage de métal (1) pour réaliser des perçages dans des pièces métalliques par usinage, comprenant
- un axe central (M),
- une surface périphérique (9),
- une face frontale (7) et une extrémité opposée (E),
- avec au moins deux arêtes de coupe principales (3/1, 3/2) disposées dans la zone de la face frontale (7), auxquelles est associée respectivement une première surface de dépouille (5/1, 5/2), dans lequel
- les surfaces de dépouille (5/1, 5/2) descendent depuis les au moins deux arêtes de coupe principales (3/1, 3/2) sous un premier angle de dépouille en direction de l'extrémité opposée (E), et
- s'étendent sur la face frontale (7) en partant de la surface périphérique (9), dans lequel
- les au moins deux arêtes principales (3/1, 3/2) se trouvent sur une première surface conique imaginaire, disposée concentriquement à l'axe central (M), qui présente un premier angle de cône (α) s'ouvrant en direction de l'extrémité opposée (E), qui est au maximum de 180°,
**caractérisé par**
- une section de centrage (19) avec au moins trois bords (21/1, 21/2, 21/3), au moins trois surfaces latérales (17/1, 17/2, 17/3) et une surface de base imaginaire, la section de centrage (19) étant prévue à la place d'une arête transversale sur l'outil de perçage (1), de sorte qu'elle remplace l'arête transversale, dans laquelle
- au moins deux des bords (21/1, 21/2, 21/3, 21/4) se trouvent sur une deuxième surface conique imaginaire, disposée concentriquement à l'axe central (M), qui présente un deuxième angle de cône (β) s'ouvrant en direction de l'extrémité opposée (E), dans lequel
- le deuxième angle de cône (β) est plus petit que le premier angle de cône (α),
- de sorte que la deuxième surface conique imaginaire - vue depuis l'extrémité opposée (E) - fait saillie par rapport à la face frontale (7), dans laquelle
- les au moins deux arêtes de coupe principales (3/1, 3/2) présentent chacune une première section d'arête de coupe principale extérieure (11/1, 11/2) et une deuxième section d'arête de coupe principale intérieure (15/1, 15/2) qui s'y raccorde, et dans lequel
- les au moins deux arêtes principales (3/1, 3/2) se continuent chacune dans l'un des bords (21/1, 21/2, 21/3, 21/4) de la section de centrage (19).

2. Outil de perçage (1) selon la revendication 1, **caractérisé en ce que** la surface de base imaginaire est un polygone régulier et/ou à symétrie ponctuelle, un centre et/ou un centre de symétrie de ce polygone étant de préférence en même temps le point de base d'une hauteur de la section de centrage, en particulier d'une pointe de celle-ci.

3. Outil de perçage (1) selon l'une des revendications 1 ou 2, **caractérisé en ce que** la section de centrage (19) est disposée coaxialement à l'axe central (M), une pointe de la section de centrage (19) étant notamment située sur l'axe central (M).

4. Outil de perçage (1) selon l'une des revendications précédentes, **caractérisé en ce que** la surface de base imaginaire de la section de centrage (19) est réalisée sous forme de triangle équilatéral ou de carré.

5. Outil de perçage (1) selon l'une des revendications précédentes, **caractérisé en ce que**
- l'outil de perçage (1) comporte trois arêtes principales (3/1, 3/2, 3/3), la section de centrage (19) comportant trois bords (21/1, 21/2, 21/3) et trois faces latérales (17/1, 17/2, 17/3), dans lequel
- les trois arêtes principales (3/1, 3/2, 3/3) se prolongent par un coude ou par une zone courbée dans les trois bords (21/1, 21/2, 21/3) de la section de centrage (19), dans lequel
- les surfaces de dépouille (5/1, 5/2, 5/3) des arêtes principales (3/1, 3/2, 3/3) se prolongent par un coude ou par une zone courbée dans les surfaces latérales (17/1, 17/2, 17/3) de la section de centrage (19), dans lequel
- les trois bords (21/1, 21/2, 21/3) de la section de centrage (19) se trouvent sur la deuxième surface conique imaginaire, et dans lequel
- la surface de base imaginaire de la section de centrage (19) est triangulaire.

6. Outil de perçage (1) selon l'une quelconque des revendications précédentes 1 à 4, **caractérisé en ce que**
- l'outil de perçage (1) comporte deux arêtes principales (3/1, 3/2), la section de centrage (19) comportant quatre bords (21/1, 21/2 ; 21/3, 21/4) et quatre faces latérales (17/1, 17/2 ; 17/3, 17/4), dans lequel
- les deux arêtes principales (3/1, 3/2) se prolongent par un coude ou par une zone courbée en deux bords opposés (21/2, 21/4) de la section de centrage (19), dans lequel
- les deux surfaces de dépouille (5/1, 5/2) se prolongent par un coude ou par une zone courbée dans deux surfaces latérales opposées (17/1, 17/2) de la section de centrage (19), dans lequel
- la surface de base imaginaire de la section de centrage (19) est quadrangulaire, et dans lequel
- au moins deux bords de la section de centrage (19), notamment les bords (21/2, 21/4) se raccordant aux deux arêtes principales (3/1, 3/2), se trouvent sur la deuxième surface conique.

7. Outil de perçage (1) selon l'une des revendications précédentes, **caractérisé en ce qu'**à une extrémité de la première surface de dépouille (5/1, 5/2, 5/3) opposée aux au moins deux arêtes principales (3/1, 3/2, 3/3) se rattache respectivement une deuxième surface de dépouille (25/1, 25/2, 25/3) qui descend de l'extrémité sous un deuxième angle de dépouille en direction de l'extrémité opposée (E).

8. Outil de perçage (1) selon l'une quelconque des revendications précédentes, **caractérisé en ce que**
- pour le premier angle de cône (α), on a : 120° ≤ α < 180°, de préférence 130° ≤ α ≤ 150°, et/ou que
- pour le deuxième angle de cône (β), on a : β < 180°, β < α et de préférence 80° ≤ β ≤ 150°, en particulier 90° ≤ β ≤ 140°, et/ou que
- les trois faces latérales (17/1, 17/2, 17/3) de la section de centrage (19) forment avec l'axe central (M) un angle (δ) - de préférence égal - qui est de l'ordre de 25° ≤ δ ≤ 60°, notamment de l'ordre de 35° ≤ δ ≤ 55°.

9. Outil de perçage (1) selon l'une quelconque des revendications précédentes 6 à 8, **caractérisé en ce que** des faces latérales (17/1, 17/2 ; 17/3, 17/4) opposées deux à deux de la section de centrage (19) forment un angle (y) s'ouvrant vers l'extrémité opposée (E), pour lequel : 60° ≤ γ ≤ 150°, notamment 80° ≤ γ ≤ 120°, dans lequel de préférence les deux paires de faces latérales opposées forment le même angle (γ).

10. Outil de perçage (1) selon l'une quelconque des revendications précédentes 5 à 9, **caractérisé en ce qu'**au moins une des faces latérales (17/1, 17/2) de la section de centrage (19) est pourvue d'une échancrure (29).

11. Outil de perçage (1) selon l'une des revendications précédentes, **caractérisé en ce que** la largeur de la surface de base imaginaire de la section de centrage (19), mesurée le long d'une ligne diamétrale imaginaire (D1), est inférieure au diamètre de l'outil de perçage (1), et représente notamment de 5 % à 12 %.

12. Outil de perçage (1) selon l'une des revendications précédentes, **caractérisé en ce qu'**à chacune des au moins deux arêtes principales (3/1, 3/2) est associée une arête secondaire (33) dans la zone de la surface périphérique (9) de l'outil de perçage (1).

13. Outil de perçage (1) selon l'une des revendications précédentes, **caractérisé en ce que** le pas angulaire des au moins deux arêtes principales (3/1, 3/2, 3/3) est asymétrique.

14. Outil de perçage (1) selon l'une des revendications précédentes, **caractérisé en ce qu'**il est réalisé sous forme d'insert pour un corps de perçage.
